# EUROPÄISCHE PATENTSCHRIFT

(11) **EP 1 470 394 B1**
(45) Veröffentlichungstag und Bekanntmachung des Hinweises auf die Patenterteilung: **30.03.2011**
(21) Anmeldenummer: 02781101.7
(22) Anmeldetag: 23.09.2002
(51) Int. Cl.: G01F 23/26

(54) **VORRICHTUNG ZUR MESSUNG VON FÜLLSTÄNDEN**
DEVICE FOR MEASURING LEVELS
DISPOSITIF DE MESURE DE NIVEAUX DE REMPLISSAGE

(30) Priorität: 18.01.2002 DE 10202030
(43) Veröffentlichungstag der Anmeldung: 27.10.2004
(73) Patentinhaber: ROBERT BOSCH GMBH, 70442 Stuttgart (DE)
(72) Erfinder: JAKOBY, Bernhard, A-1180 Wien (AT); BUSKIES, Matthias, 72800 Eningen (DE)
(86) Internationale Anmeldenummer: PCT/DE2002/003564
(87) Internationale Veröffentlichungsnummer: WO 2003/060438

(56) Entgegenhaltungen:
- WO-A-99/30117
- DE-A- 2 930 051
- DE-A- 10 118 061
- DE-A- 19 649 366
- DE-C- 4 323 827
- US-A- 3 103 815
- US-A- 5 437 184

## Beschreibung

Die Erfindung betrifft eine Vorrichtung zur Messung von Füllständen gemäß dem Oberbegriff des Anspruchs 1. Die Vorrichtung ist insbesondere dazu geeignet, als Füllstandssensor für Flüssigkeiten eingesetzt zu werden.

Aus dem Stand der Technik sind verschiedene Füllstandssensoren bekannt, die unterschiedliche physikalische Effekte ausnutzen. Eine mögliche Ausgestaltung besteht in einem kapazitiven Messfühler mit einem veränderlichen Dielektrikum, bei dem sich bei einer Veränderung der Füllstandshöhe der Anteil des zu messenden Mediums als Dielektrikum innerhalb des Kondensators verändert und somit eine Kapazitätsveränderung bewirkt wird. Auf Grund der Kapazitätsveränderung kann auf den Füllstand geschlossen werden. Neben einer Ausbildung als ein Zylinderkondensator mit entsprechenden koaxialen Strukturen sind Plattenkondensatoren oder flach ausgebildete Kondensatoren (Interdigitalstrukturen) auf der Basis von Leiterplatten oder Stanzteilen möglich. In Dokument US 3103815 ist eine offene Struktur beschrieben, die aus zwei zueinander versetzt angeordneten Basisteilen besteht.

Aufgabe der Erfindung ist es, eine Vorrichtung zur Messung von Füllständen bereitzustellen, die kostengünstig zu fertigen ist, die eine möglichst genaue Messung ermöglicht und die das Ablaufverhalten des zu messenden Mediums verbessert.

Erfindungsgemäß wird diese Aufgabe durch eine Vorrichtung mit den Merkmalen des Anspruchs 1 gelöst. Vorteilhafte Ausgestaltungen und Weiterbildungen sind in den Unteransprüchen beschrieben.

Durch die Ausbildung des Messfühlers aus zwei Basisteilen, von denen jeweils fingerförmige Elektroden abstehen, die zueinander versetzt angeordnet sind, ist es möglich, eine Gesamtkapazität der Vorrichtung durch Multiplikation der Einzelkapazitäten mit der Anzahl der Elektrodenpaare zu realisieren, wodurch ein proportionales Verhältnis der in dem Medium eingetauchten Elektrodenpaare zu der Gesamtkapazität näherungsweise erreicht wird. Die Basisteile werden dabei durch ein Fixierelement dergestalt einander zugeordnet, dass einerseits eine konstante Zuordnung der Elektroden untereinander stattfindet und andererseits ein minimaler störender Anteil anderer Materialien zwischen den Elektroden angeordnet ist, um so eine möglichst genaue Messung zu erhalten. Weiterhin wird auf Grund der offenen Struktur im Überlappungsbereich der Elektroden ein rasches Abfließen bzw. Herausgleiten des Mediums bei schwankenden Füllständen erreicht, so dass eine schnelle Reaktion auf sich verändernde Füllstände erfolgen kann.

In einer Weiterbildung ist vorgesehen, dass der Messfühler eine mäanderförmige Interdigitalstruktur aufweist, wodurch sich eine einfache Berechnung der Gesamtkapazität bei sich verändernden Füllständen erreicht werden kann. Interdigitalstruktur bedeutet, dass zwischen den fingerförmigen Elektroden Räume vorhanden sind, in die korrespondierende fingerförmige Elektroden eines anderen Basisteils eingeschoben bzw. eingelegt werden können. Zwischen den Elektroden der beiden Basisteile ist immer noch ein Freiraum vorhanden, der durch das zu messende Medium ausgefüllt wird. Durch den hin- und hergehenden Verlauf der Freiräume zwischen den Elektroden bildet sich ein mäanderförmiger Verlauf aus, durch den ein Abfließen des zu messenden Mediums bei Füllstandsveränderungen oder Schwankungen erleichtert wird.

Um eine möglichst kompakte Bauweise zu erreichen, ist es vorgesehen, dass die Elektroden der Basisteile im wesentlichen in einer Ebene angeordnet sind, so dass der Messfühler eine planare Struktur erhält.

Zur Verbesserung des Ablaufverhaltens des zu messenden Mediums ist es vorgesehen, dass sich die Elektroden von dem Basisteil ausgehend verjüngen, wodurch zudem die mechanische Stabilität der Elektroden verbessert wird.

Eine sehr kostengünstige Art und Weise die Elektroden und die Basisteile zueinander zu fixieren besteht darin, das Fixierelement aus einer Kunststoffanspritzung oder einer Kunststoffumspritzung herzustellen, was ein erprobtes und bewährtes Verfahren darstellt, mit dem eine hohe Stückzahl an Messfühlern bei ausreichender Genauigkeit hergestellt werden kann. Eine hohe Lagegenauigkeit der Basisteile und dadurch der Elektroden wird durch eine Ausbildung des Fixierelementes als ein Rahmen, insbesondere als ein geschlossener Rahmen erreicht, wobei der Rahmen ebenfalls mittels Kunststoffumspritzung hergestellt werden kann. Da sich das Umspritzungsmaterial nicht im Überlappungsbereich der Elektroden befindet, also nicht zwischen den Elektroden, tritt das Umspritzungsmaterial nicht als Dieletrikum in Funktion und die Gesamtkapazität und damit die Messgenauigkeit wird nicht beeinflusst.

Um den Messfühler möglichst preisgünstig herzustellen ist vorgesehen, dass das Basisteil und die Elektroden aus einem Stanzgitter, vorzugsweise einstückig hergestellt werden, wobei das Stanzgitter vorzugsweise aus einem im Umgebungsmedium robusten Metall hergestellt ist. Alternativ zu einer solchen Materialwahl ist es vorgesehen, die Elektroden und gegebenenfalls das Basisteil mit einer Schutzbeschichtung zu überziehen, um die Elektroden vor aggressiven Medien zu schützen.

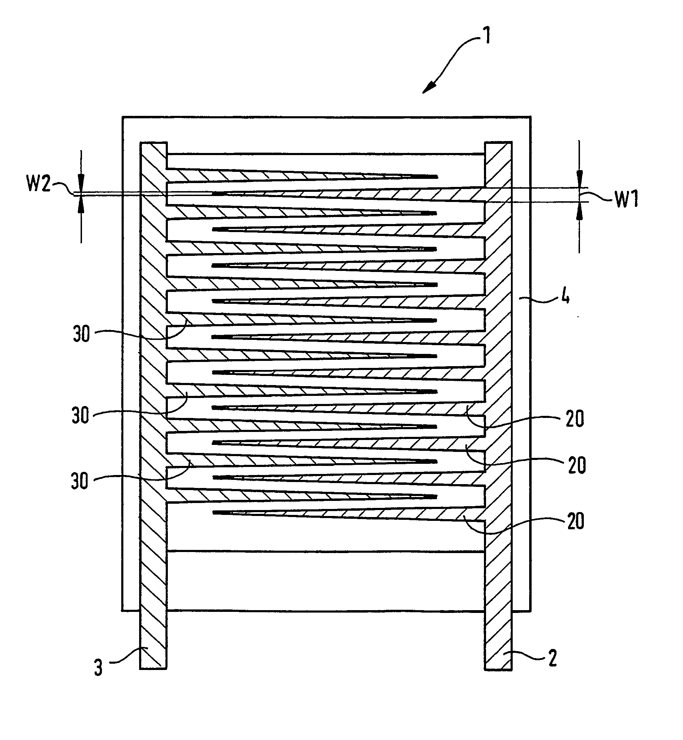

Nachfolgend wird die Erfindung anhand eines Ausführungsbeispiels erläutert werden. Die einzige Figur zeigt:
e ine Schemadarstellung einer Messvorrichtung.

In der Figur ist ein Messfühler 1 in einer schematischen Darstellung gezeigt, wobei der Messfühler 1 aus zwei Basisteilen 2, 3 aufgebaut ist, von denen jeweils Elektroden 20, 30 in eine Richtung abstehen. In dem dargestellten Ausführungsbeispiel liegen die Elektroden 20, 30 in einer Ebene, alternative Ausgestaltungen oder räumliche Anordnungen der Elektroden 20, 30 können ebenfalls vorgesehen sein. Die Elektroden 20, 30 der beiden Basisteile 2, 3 stehen einander gegenüber und sind versetzt zueinander angeordnet, so dass sich zwischen den Elektroden 20, 30 ein mäanderförmiger Freiraum bildet, in den ein nicht dargestelltes Medium, zum Beispiel eine Flüssigkeit, eindringen kann. Auf Grund des Eindringens dieses Mediums verändert sich die Gesamtkapazität des Messfühlers 1 auf Grund der unterschiedlichen Dielektrizitätskonstante des Mediums im Verhältnis zur Luft. Je nach Füllstand verändert sich somit die Kapazität zwischen den jeweiligen Elektrodenpaaren, eine nicht dargestellte Elektronikeinheit wertet das Signal aus und gibt es zu einer Anzeigeeinrichtung weiter oder regelt auf Grund des gemessenen Wertes ein System entsprechend.

Außerhalb des Überlappungsbereiches der Elektroden 20, 30, also in dem Bereich, in dem die Elektroden 20, 30 nicht miteinander kämmen, ist ein umlaufender Rahmen 4 an den Basisteilen 2, 3 angespritzt, um eine zuverlässige und preiswerte Lagefixierung der Elektroden 20, 30 zu bewirken. Die fingerförmigen Elektroden 20, 30 sind somit einseitig an den jeweiligen Basisteilen 2, 3 gelagert und der Kunststoffanteil zwischen den Elektroden 20, 30 auf Grund des Rahmens 4 bezüglich der elektrischen Kapazität ist vernachlässigbar gering. Dies hat insbesondere den Vorteil einer erhöhten Messgenauigkeit, da übliche Kunststoffe hinsichtlich der relativen Dielektrizitätszahlen eine starke Temperaturabhängigkeit aufweisen, so dass durch starke nichtlineare Änderungen der Teilkapazität bei zwischen den Elektroden vorliegenden Kunststoffmaterialien starke nichtlineare Änderungen mit der Temperatur eine genaue Auswertung des Füllstandes unmöglich machen.

Die erfindungsgemäße, planare Struktur realisiert im Überlappungsbereich freistehende Elektroden 20, 30, wodurch der Kunststoffanteil hinsichtlich der Kapazität vernachlässigbar wird und man gleichzeitig zwischen den Elektroden 20, 30 einen Freiraum in Mäanderform erhält, durch welchen das Ablaufen der Flüssigkeit bzw. des Mediums deutlich verbessert wird. In dem dargestellten Ausführungsbeispiel verjüngen sich die Elektroden 20, 30 von dem jeweiligen Basisteil 2, 3 ausgehend (W1 >W2), wodurch die mechanische Stabilität der Elektroden 20, 30 sowie das Abfließverhalten weiterhin verbessert wird.

Die Struktur des Messfühlers 1 kann über ein Stanzgitter hergestellt werden, welches zur Fixierung gegeneinander mit einem geschlossenen oder offenen Kunststoffrahmen 4 umspritzt wird. Sofern der Rahmen 4 und damit die gesamte Messkapazität in das zu messende Medium eingetaucht wird, können auf diese Art und Weise auch Sensoren zur Erfassung der relativen Dielektrizitätszahlen verwirklicht werden.

## Patentansprüche

1. Vorrichtung zur Messung von Füllständen, insbesondere Flüssigkeitsfüllstanden, mit
- einem kapazitiven Meßfühler (1) sowie
- einer mit dem Meßfühler (1) verbundenen Einheit zur Auswertung eines Meßsignals von dem Meßfühler (1),
wobei
- der Meßfühler (1) zumindest zwei Basisteile (2, 3) mit davon abstehenden, fingerförmigen Elektroden (20, 30) aufweist, und
- die Elektroden (20, 30) einander gegenüberstehen und versetzt zueinander angeordnet sind, so dass ein Überlappungsbereich gebildet wird, und
- die Basisteile (2, 3) durch zumindest ein Fixierelement (4) zueinander lagefixiert sind, wobei sich das Fixierelement (4) außerhalb des Überlappungsbereiches der Elektroden (20, 30) befindet,
**dadurch gekennzeichnet, daß**
die Elektroden (20, 30) sich von dem Basisteil (2, 3) ausgehend verjüngen.

2. Vorrichtung nach Anspruch 1, **dadurch gekennzeichnet, daß** der Meßfühler (1) eine mäanderförmige Interdigitalstruktur aufweist.

3. Vorrichtung nach Anspruch 1 oder 2, **dadurch gekennzeichnet, daß** die Elektroden (20, 30) im wesentlichen in einer Ebene angeordnet sind.

4. Vorrichtung nach einem der voranstehenden Ansprüche, **dadurch gekennzeichnet, daß** das Fixierelement (4) aus einer Kunststoffanspritzung oder Kunststoffurnspritzung besteht.

5. Vorrichtung nach einem der voranstehenden Ansprüche, **dadurch gekennzeichnet, daß** das Fixierelement (4) als ein Rahmen, insbesondere geschlossener Rahmen ausgebildet ist.

6. Vorrichtung nach einem der voranstehenden Ansprüche, **dadurch gekennzeichnet, daß** das Basisteil (2, 3) mit den Elektroden (20, 30) aus einem Stanzgitter, insbesondere aus einem Metall hergestellt ist.

7. Vorrichtung nach einem der voranstehenden Ansprüche, **dadurch gekennzeichnet, daß** die Elektroden (20, 30) mit einer Schutzbeschiehtung versehen sind.

## Claims

1. Device for measuring levels, in particular liquid levels, having
- a capacitive measuring sensor (1) and
- a unit which is connected to the measuring sensor (1) and is intended to evaluate a measurement signal from the measuring sensor (1),
- the measuring sensor (1) having at least two base parts (2, 3) with finger-shaped electrodes (20, 30) which project from said parts, and
- the electrodes (20, 30) being opposite one another and being arranged with an offset with respect to one another, such that an overlap region is formed, and
- the base parts (2, 3) being fixed in position with respect to one another by at least one fixing element (4), the fixing element (4) being outside the overlap region of the electrodes (20, 30),
**characterized in that**
the electrodes (20, 30) taper starting from the base part (2, 3).

2. Device according to Claim 1, **characterized in that** the measuring sensor (1) has a meandering interdigital structure.

3. Device according to Claim 1 or 2, **characterized in that** the electrodes (20, 30) are arranged substantially in one plane.

4. Device according to one of the preceding claims, **characterized in that** the fixing element (4) consists of an injection-moulded-on plastic part or an injection-moulded plastic casing.

5. Device according to one of the preceding claims, **characterized in that** the fixing element (4) is in the form of a frame, in particular a closed frame.

6. Device according to one of the preceding claims, **characterized in that** the base part (2, 3) with the electrodes (20, 30) is produced from a stamped grid, in particular from a metal.

7. Device according to one of the preceding claims, **characterized in that** the electrodes (20, 30) are provided with a protective coating.

## Revendications

1. Dispositif de mesure de niveau, en particulier du niveau d'un liquide, le dispositif présentant :
- une sonde capacitive de mesure (1) ainsi
- qu'une unité reliée à la sonde de mesure (1) et destinée à évaluer un signal de mesure délivré par la sonde de mesure (1),
- la sonde de mesure (1) présentant au moins deux pièces de base (2, 3) dont débordent des électrodes (20, 30) en forme de doigt,
- les électrodes (20, 30) étant situées face à face en décalage mutuel de manière à former une zone de superposition et
- les pièces de base (2, 3) étant immobilisées l'une par rapport à l'autre par au moins un élément de fixation (4), l'élément de fixation (4) étant situé à l'extérieur de la zone de superposition des électrodes (20, 30),
**caractérisé en ce que**
les électrodes (20, 30) se rétrécissent à partir de la pièce de base (2, 3).

2. Dispositif selon la revendication 1, **caractérisé en ce que** la sonde de mesure (1) présente une structure en doigts entrelacés formant des méandres.

3. Dispositif selon la revendication 1 ou 2, **caractérisé en ce que** les électrodes (20, 30) sont disposées essentiellement dans un même plan.

4. Dispositif selon l'une des revendications précédentes, **caractérisé en ce que** l'élément de fixation (4) est constitué de matière plastique injectée sur les pièces de base ou autour de ces dernières.

5. Dispositif selon l'une des revendications précédentes, **caractérisé en ce que** l'élément de fixation (4) est configuré en encadrement et en particulier en encadrement fermé.

6. Dispositif selon l'une des revendications précédentes, **caractérisé en ce que** la pièce de base (2, 3) est fabriquée en même temps que les électrodes (20, 30) à partir d'une grille estampée, en particulier en métal.

7. Dispositif selon l'une des revendications précédentes, **caractérisé en ce que** les électrodes (20, 30) sont dotées d'un revêtement protecteur.
